# FASCICULE DE BREVET EUROPEEN

(11) **EP 2 139 239 B1**
(45) Date de publication et mention de la délivrance du brevet: **28.09.2011**
(21) Numéro de dépôt: 09163067.3
(22) Date de dépôt: 18.06.2009
(51) Int. Cl.: H04N 7/26

(54) **Procédé de codage vidéo avec mode non compressé et dispositif mettant en oeuvre le procédé**
Videokodierungsverfahren in unkomprimiertem Modus und Vorrichtung zur Umsetzung dieses Verfahrens
Method for encoding video with non-compressed mode and device implementing the method

(30) Priorité: 23.06.2008 FR 0854135
(43) Date de publication de la demande: 30.12.2009
(73) Titulaire: Thomson Licensing, 92130 Issy-les-Moulineaux (FR)
(72) Inventeur: Tchernatinsky, Lionel, 35000, RENNES (FR); Lorvellec, Karine, 35520, LA MEZIERE (FR); Mailleux, Denis, 35500, VITRE (FR)
(74) Mandataire: Lucas, Laurent Jacques

(56) Documents cités:
- US-A1- 2005 018 774
- US-A1- 2007 098 081
- US-A1- 2007 133 892

## Description

L'invention concerne un procédé et un dispositif de codage vidéo et s'applique notamment aux domaines de la transmission, de l'analyse, du décodage et du transcodage de vidéo.

Une séquence vidéo comporte de par sa nature même une importante redondance statistique tant dans le domaine temporel que spatial. La volonté d'utiliser toujours plus efficacement la bande passante des média de transmissions sur lesquels transitent ces séquences et les objectifs de réduction du coût de leur stockage ont posé très tôt la question de la compression vidéo. Les techniques classiques de compression vidéo peuvent généralement se diviser en deux étapes. La première vise à réduire la redondance spatiale et pour cela à compresser une image fixe. L'image est tout d'abord divisée en blocs de pixels (de 4x4 ou 8x8 selon, par exemple, les standards MPEG-1/2/4), un passage dans le domaine fréquentiel puis une quantification permettent d'approximer ou de supprimer les hautes fréquences auxquelles l'oeil est moins sensible, et enfin les données quantifiées sont codées entropiquement. La seconde a pour but de réduire la redondance temporelle. Cette technique permet de prédire une image à partir d'une ou plusieurs autre(s) image(s) de référence(s) précédemment décodée(s) au sein de la même séquence (prédiction de mouvement). Cette technique consiste à chercher dans ces images de référence le bloc qui correspond le mieux à celui à prédire, et seul est conservé un vecteur estimation de mouvement correspondant au déplacement du bloc entre les deux images ainsi qu'une erreur résiduelle permettant de raffiner le rendu visuel..

Un encodeur vidéo classique traitant un signal vidéo après découpage des images en macroblocs est composé notamment des deux éléments fonctionnels suivants :
- une boucle d'encodage réalisant le passage dans le domaine fréquentiel, la quantification, la compensation de mouvement, la prédiction intra et le filtre de boucle ;
- un codeur entropique réalisant une compression sans perte du signal après quantification du signal, par exemple, avec un codage de Huffman ou un codage arithmétique.

Un macrobloc est compressé en étant traité tout d'abord par la boucle d'encodage puis par le codeur entropique. Dans un système classique, ces deux étapes peuvent être considérées comme indépendantes.

Les techniques de compression utilisant la prédiction de mouvement et la prédiction intra s'avèrent très efficaces en pratique. Pourtant, pour certaines images d'un flux vidéo et/ou lorsque la quantification utilise un pas très faible, la compression donne des résultats peu probants. Il est possible notamment d'avoir en sortie du codeur vidéo un nombre de bits après compression supérieur au nombre de bits de la source. Il est dans ce cas plus avantageux de transmettre le flux en mode non-compressé, c'est-à-dire transmettre en sortie de l'encodeur vidéo les échantillons de la source vidéo correspondant au macrobloc en cours de traitement. A titre d'exemple, la norme H.264 définit un mode non-compressé appelé mode I_PCM. Lorsque ce mode est activé, les échantillons sources, à savoir les composantes de luminance et de chrominance représentant les pixels de l'image, sont envoyées directement vers le bloc fonctionnel réalisant le codage entropique pour y être formatés sans qu'aucune compression ne soit appliquée. Il existe deux cas d'utilisation du mode de codage I_PCM dans la norme H.264 :
- utilisation en mode de codage standard : le mode I_PCM peut être utilisé par un encodeur au même titre que l'ensemble des autres modes proposés; il est à noter que le débit généré par macrobloc est alors constant ;
- utilisation en mode de repli : une taille maximum est imposée au flux de bits généré pour le codage d'un macrobloc. Cela signifie que si le nombre de bits correspondant à un macrobloc après compression dépasse une valeur limite, le mode de codage I_PCM est utilisé et les échantillons de la source vidéo sont directement transmis.

La valeur limite imposée par le standard pour l'utilisation en mode de repli est fixée à la valeur pour laquelle un encodeur cesse de réduire le débit et où il devient plus intéressant de transmettre directement la source. Par exemple, lors du codage 4:2:0 sur 8 bits, un macrobloc est représenté sur 3072 bits. La norme H.264 définit un nombre maximum de bits, soit 3200 bits, au-delà duquel l'utilisation du mode de codage I_PCM est requise. Le nombre de bits nécessaires au codage d'un macrobloc non-compressé correspond aux bits nécessaires à la transmission des échantillons luminance et chrominance, soit les 3072 bits précédemment cités ainsi que les bits nécessaires à la transmission des informations de mode (mb_type et mb_skip_flag, par exemple). La décision d'utiliser ce mode de codage ainsi que l'implémentation du mode I_PCM, lorsque que l'on considère le mode de repli, se fait au niveau du codeur entropique. Celui-ci vérifie après le traitement de chaque macrobloc par la boucle d'encodage et codage entropique le nombre de bits générés. Si ce nombre est supérieur à la limite de 3200 bits, les bits générés sont retirés du flux de bits final, les contextes de codage sont restaurés, c'est-à-dire que le codeur entropique revient à un état précédent dans lequel il se trouvait en début de macrobloc, et les échantillons sources sont envoyés dans le flux de bits. Lorsque le mode I_PCM est choisi par le codeur entropique, un signal de contrôle appelé 'I_PCM_control' est activé et est propagé aux blocs fonctionnels de la boucle d'encodage, c'est-à-dire aux blocs de prédictions (intra et inter), de reconstruction et éventuellement à d'autres blocs de l'encodeur suivant le choix d'implémentation.

Le codage d'un macrobloc dépend du codage de ses voisins. Par exemple, dans le cas de la norme H.264, il y a une dépendance spatiale du macrobloc courant vis-à-vis du macrobloc situé à sa gauche et du macrobloc situé au dessus de celui-ci. Idéalement, il faut que le codage de ces macroblocs soit terminé avant de pouvoir traiter le macrobloc courant.

Afin d'optimiser l'implémentation de l'encodeur et d'éviter un traitement purement séquentiel macrobloc après macrobloc, il est usuel de paralléliser le traitement des macroblocs. Du fait de la séparation fonctionnelle de la boucle d'encodage et du codeur entropique, le macrobloc courant peut-être traité avant que le traitement des blocs adjacents ne soit terminé. Par exemple, si le bloc de gauche est en cours de codage entropique, les traitements de la boucle d'encodage (transformée, quantification, ...) pourront être appliqués en parallèle au bloc courant. Une architecture d'encodeur de type « pipeline » peut ainsi être réalisée.

Si le mode non-compressé est implémenté en mode repli, puisque le choix de l'activation ou non du mode s'effectue au niveau du codeur entropique ; il n'est pas possible de prévoir la manière dont seront codés les blocs adjacents avant que leur traitement par le codeur entropique ne soit terminé. Il faut dans ce cas attendre le résultat du codage entropique et les traitements de la boucle d'encodage et du codeur entropique ne peuvent plus être parallélisés. Lorsque le mode de codage d'un macrobloc n'est connu que tardivement comme c'est le cas lorsque le mode non-compressé est choisi par le codeur entropique, de nombreux blocs fonctionnels ne peuvent démarrer les traitements du macrobloc suivant avant l'arrivée de cette information. En effet, lors d'un changement tardif de mode de codage, les informations contextuelles du macrobloc courant deviennent incohérentes. Lorsqu'il existe des « pipelines » dans la réalisation de l'encodeur, on observe que les informations des macroblocs précédents sont également incohérentes. Un des « pipelines » de la boucle d'encodage commence au niveau de l'opérateur de prédiction, puis passe par les opérateurs de transformé, quantification, quantification inverse et transformé inverse, reconstruction et prédiction intra pour revenir au niveau de l'opérateur de prédiction. Un autre « pipeline » démarre en sortie de l'opérateur de quantification et réalise toutes les opérations de codage entropique qui comportent, entre autre, les opérations de binarisation, de codage arithmétique et de choix du codage du macrobloc en mode compressé ou non-compressé. La boucle d'encodage et le codeur entropique peuvent effectuer leurs opérations en parallèle, les deux pipelines n'ont alors pas la même profondeur et ne sont pas synchronisés, le traitement du macrobloc courant par la boucle d'encodage ne peut commencer avant la fin du traitement du macrobloc précédent, alors que le codeur entropique peut commencer les traitements du macrobloc courant avant d'avoir terminé les traitements du macrobloc précédent. Lorsque le codeur entropique choisit le mode non-compressé, la prise en compte de ce nouveau mode de codage par le « pipeline » de la boucle d'encodage provoque l'apparition de données incohérentes en sortie de la boucle d'encodage. Cette incohérence provient par exemple de la prise en compte, lors du codage du macrobloc courant suivant un macrobloc non compressé, d'un macrobloc reconstruit selon la boucle d'encodage qui est différent du macrobloc non-compressé présent dans le flux binaire. La conséquence est que des distorsions sont introduites dans la séquence vidéo lorsque le mode non-compressé est utilisé. En d'autres termes, des distorsions sont introduites lorsque l'état interne du décodeur n'est pas cohérent par rapport à l'état interne du codeur vidéo.

En pratique cette dépendance rend difficile la réalisation d'un encodeur sur plateforme parallèle (multiprocesseur, DSP, FPGA ou ASIC) en présence de macroblocs non-compressés. A titre d'exemple, s'il faut traiter 1620 macroblocs par période de 40 millisecondes et qu'une implémentation donnée permet de satisfaire à cette contrainte temporelle en exécutant en parallèle les opérations de la boucle d'encodage et du codeur entropique, lorsque le mode non-compressé est activé, le traitement en parallèle est rendu impossible et il devient difficile de tenir la contrainte des 40 millisecondes.

Dans la pratique, pour le cas des encodeurs H.264, la plupart des réalisations contournent le problème en n'implémentant pas le mode de codage I_PCM. C'est une solution statistiquement valide puisque les conditions d'apparition du codage I_PCM sont rares. L'inconvénient est qu'il reste possible de générer un flux incorrect du point de vue syntaxique ou sémantique. Ledit flux ne pourra en conséquence pas être décodé.

Une autre solution au problème est de mémoriser au niveau des blocs fonctionnels de l'encodeur vidéo l'état des macroblocs déjà codés et de faire une restauration totale dans un état précédent lorsqu'un macrobloc I_PCM survient. Cette solution présente deux inconvénients majeurs :
- chacun des blocs fonctionnels doit être capable de stocker le volume de données nécessaire à la restauration (échantillons, mode de codage et autres attributs comme les vecteurs de mouvement) ;
- le flot des données est interrompu pendant la restauration. Cette solution impose aux blocs fonctionnels de revenir sur le codage de macroblocs qui ont déjà été codés et donc de mettre en attente les macroblocs.

Le brevet americain avec référence US 2007/0133892 dévoile un codeur doté d'une architecture de type pipeline qui assure une meilleure parallélisation du codage en activant le mode I_PCM plus tôt dans la boucle de codage.

Un but de l'invention est notamment de pallier les inconvénients précités.

A cet effet l'invention a pour objet un procédé de codage vidéo comportant un mécanisme permettant d'activer ou de désactiver la compression des macroblocs du flux vidéo à coder en fonction de l'efficacité de la compression et fonctionnant dans au moins deux modes, un premier mode de codage normal et un second mode non compressé, ledit procédé étant caractérisé en ce que :
- en mode de codage normal, le macrobloc en cours de traitement est compressé par une boucle d'encodage puis par un codeur entropique, ladite compression étant considérée efficace si la taille qu'occupe le macrobloc compressé est sensiblement inférieure à la taille qu'occupe le macrobloc sans compression ;
- dans le cas ou la compression du macrobloc en cours de traitement n'est pas efficace, le mode non compressé est activé, ledit mode non compressé étant caractérisé par le fait que les échantillons de la source vidéo correspondant au macrobloc en cours de traitement sont transmis sans compression en sortie du codeur, le mode non compressé étant maintenu après avoir été activé tant que les éléments fonctionnels de la boucle d'encodage ne sont pas revenus dans un état stable.

Une variante de ce procédé est caractérisée en ce que suite à l'activation du mode non compressé, la détection du retour de la stabilité de la boucle d'encodage est indiquée au codeur entropique à l'aide d'un signal de contrôle, ledit signal étant positionné dans un état actif lorsque l'ensemble des blocs fonctionnels de la boucle d'encodage affectés par l'activation du mode non compressé sont revenus dans un état stable.

Une variante de ce procédé est caractérisée en ce que, suite à l'activation du mode non compressé, le retour de la stabilité de la boucle d'encodage est déduit par le codeur entropique à l'aide d'un paramètre indiquant le temps de restauration, la valeur dudit paramètre devant être déterminée de manière à ce que les éléments de la boucle d'encodage aient le temps de revenir à un état stable durant cette période.

Une variante de ce procédé est caractérisée en ce que le codeur vidéo suit les spécifications de la norme H.264.

Une variante de ce procédé est caractérisée en ce que l'efficacité de la compression est vérifiée en comparant le nombre de bits après compression du macrobloc courant à une valeur seuil.

Une variante de ce procédé est caractérisée en ce que suite à l'activation du mode non compressé, l'état du codeur entropique est restauré, c'est-à-dire que le codeur entropique revient à l'état précédent dans lequel il se trouvait au début du traitement du macrobloc pour lequel le mode non compressé a été déclenché.

L'invention a aussi pour objet un dispositif de codage vidéo mettant en oeuvre le procédé et caractérisé en ce qu'il comporte au moins :
- une boucle d'encodage permettant de compresser les macroblocs en appliquant au moins les étapes de transformée, de quantification, de prédiction intra et de compensation de mouvement sur le signal entrant ;
- un codeur entropique réalisant en mode de codage normal une compression du flux d'information en sortie de la boucle d'encodage et comportant des moyens de vérifier l'efficacité de la compression, des moyens de décider de l'utilisation du mode non compressé, des moyens de configurer la boucle d'encodage du dispositif et des moyens de vérifier la stabilité de ladite boucle.

D'autres caractéristiques et avantages de l'invention apparaitront à l'aide de la description qui suit donnée à titre illustratif et non limitatif, faite au regard des dessins annexés parmi lesquels :
- la figure 1 illustre le procédé selon l'invention introduisant un mode forcé non-compressé ;
- la figure 2 présente un exemple de diagrammes temporels illustrant la séquence des opérations exécutés par un dispositif selon l'invention ;
- la figure 3 présente un exemple de dispositif de compression vidéo comprenant le procédé selon l'invention.

L'invention a notamment comme avantage de permettre d'exécuter en parallèle les opérations de la boucle d'encodage et du codeur entropique lorsque le mode forcé non-compressé est activé et donc de réduire le temps d'exécution des opérations. En outre, l'invention permet aux blocs fonctionnels constitutifs de la boucle d'encodage du codeur vidéo de revenir dans un état stable avant la reprise de la compression des macroblocs et donc d'éviter des distorsions non voulues dans le flux vidéo.

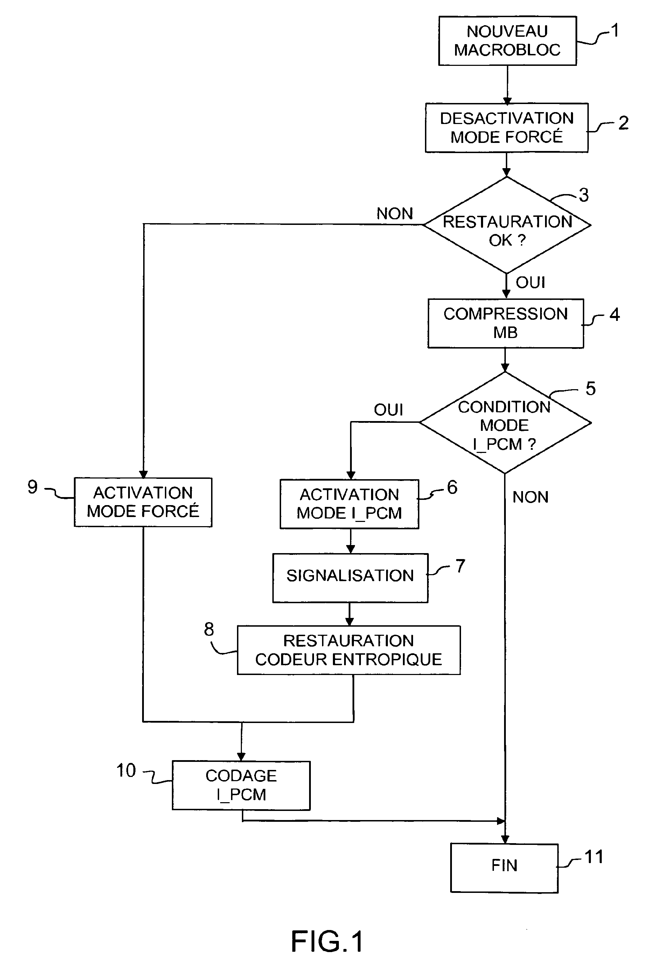

La figure 1 présente par un diagramme un exemple de mise en oeuvre du procédé selon l'invention. Le procédé selon l'invention, comme détaillé ci-après, traite un flux vidéo compressé macrobloc par macrobloc. Un macrobloc représente une partie d'une image d'un flux vidéo. Cette partie de l'image comprend un ensemble de bloc de pixels. A titre d'exemple, un macrobloc peut représenter 16x16 pixels d'une image. Le macrobloc traité à un instant donné par le procédé est appelé dans la description macrobloc courant ou macrobloc en cours de traitement, les deux expressions ayant le même sens.

Le procédé selon l'invention est composé d'étapes à appliquer pour chaque macrobloc du flux vidéo à compresser. Le procédé permet, dans un premier temps, de détecter si la compression est efficace pour le macrobloc en cours de traitement. Dans un deuxième temps, si la compression n'est pas considérée comme efficace, les échantillons de signal du macrobloc en cours de traitement sont transmis sans être compressés. La transmission des macroblocs suivants est ensuite forcée en mode non-compressé afin que la boucle d'encodage converge vers un état stable et que la compression des macroblocs puisse reprendre sans que des distorsions ne soient introduites artificiellement dans les images de la séquence vidéo à transmettre. En d'autres termes, les blocs fonctionnels de la boucle d'encodage opèrent une restauration de contexte, le contexte d'un macrobloc étant composé de l'ensemble des informations sauvegardées et qui sont utilisées pour le codage des macroblocs suivants.

Comme introduit précédemment, un codeur vidéo est typiquement constitué d'une boucle d'encodage et d'un codeur entropique. Dans l'exemple de la figure 1, les notations introduites prennent en compte la terminologie propre à la norme H.264. Ainsi le mode non-compressé est désigné comme étant le mode I_PCM. Le procédé selon l'invention pourra être considéré en dehors du cadre de la norme H.264. Le procédé selon l'invention est exécuté au niveau du codeur entropique pour chaque macrobloc traité par le codeur vidéo.

Le procédé est exécuté dès qu'un nouveau macrobloc est détecté 1 en entrée du codeur entropique. Le mode forcé est désactivé par défaut 2 en positionnant, par exemple, une variable booléenne appelée `mode_I_PCM forcé' à '0'. La stabilité des blocs fonctionnels impactés par le mode I_PCM est ensuite vérifiée 3. Les blocs fonctionnels sont considérés comme étant dans un état stable ou cohérent lorsqu'ils n'introduisent pas de distorsion à la reprise de la compression en mode normal.

Si l'état des blocs n'est pas stable, cela signifie que le mode I_PCM a été activé récemment pour l'un des macroblocs précédemment traités et que la restauration de contexte pour les blocs fonctionnels de la boucle d'encodage n'est pas terminée. Dans ce cas, le mode I_PCM forcé est activé 9. La variable `mode_I_PCM forcé' est positionnée à '1', le macrobloc en cours de traitement est transmis sans compression 10 et l'exécution du procédé se termine 11. Le mode forcé permet que les blocs fonctionnels du codeur vidéo retrouvent un état stable. Cette phase de restauration consiste à remettre dans un état cohérent les informations des macroblocs. Pendant cette période, il est inutile de reprendre des opérations de ré-encodage (prédiction, transformé, quantification, transformé inverse, quantification inverse, reconstruction, etc.).

Si l'état des blocs fonctionnels de la boucle d'encodage est stable, ce qui est le cas en mode normal, le macrobloc en cours de traitement est compressé 4 par le codeur entropique. L'efficacité de la compression est ensuite vérifiée 5.

Comme déjà cité précédemment à titre d'exemple, si le codeur travaille au format 4:2:0 sur 8 bits et que le macrobloc après avoir été compressé occupe plus que 3200 bits, l'utilisation du mode I_PCM est activée. La variable 'mode_I_PCM_forcé' est positionnée à `1' 6. Les blocs fonctionnels de la boucle d'encodage du codeur vidéo devront alors être configurés en conséquence. Pour cela, une signalisation est mise en place 7. Les bits générés après compression sont ensuite retirés du flux de bits et les contextes de codage du codeur entropique sont restaurés 8, c'est-à-dire que le codeur entropique revient à l'état dans lequel il était en début de macrobloc. Le macrobloc en cours de traitement est ensuite transmis sans compression 10 et l'exécution du procédé se termine 11.

Si la compression du macrobloc en cours de traitement est efficace 5, le macrobloc est transmis compressé en sortie du codeur et l'exécution du procédé se termine 11.

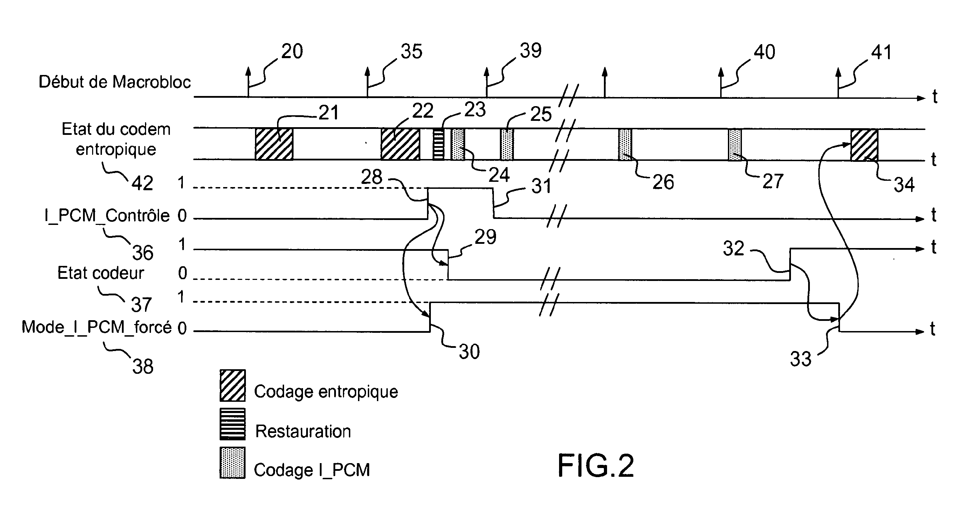

La figure 2 présente un exemple de diagrammes temporels illustrant la séquence des opérations exécutées par un dispositif selon l'invention. Lesdits diagrammes permettent de suivre l'état du codeur entropique 42, et l'état des signaux de contrôle utilisés par le dispositif, soit le signal I_PCM_Control 36 indiquant l'activation du mode I_PCM, le signal Etat_codeur 37 indiquant si le codeur vidéo est dans un état stable et le signal Mode_I_PCM_forcé 38 indiquant l'activation du mode I_PCM forcé. La figure montre que le mode non-compressé, soit le mode I_PCM dans de cas de la norme H.264, est traité par le procédé selon l'invention comme une exception informatique comprenant une période de restauration suivant l'occurrence de cette exception. Lorsque les coefficients après quantification représentant un macrobloc en sortie de la boucle de codage sont disponibles 20 en entrée du codeur entropique, le codeur entropique compresse le macrobloc 21. Si la compression est jugée efficace, le flux compressé est présenté en sortie du codeur vidéo. L'opération se répète pour le macrobloc suivant 35. Le codeur entropique compresse 22 le flux d'entrée. Le procédé vérifie de nouveau l'efficacité de la compression. Dans l'exemple de la figure 2, la compression du deuxième macrobloc est jugée inefficace. Il est décidé de passer en mode I_PCM. Pour cela, un signal de signalisation 'I_PCM_Control' 36 est activé 28 afin de configurer les blocs fonctionnels de la boucle de codage du codeur vidéo. Ce sont en général les blocs fonctionnels de la boucle d'encodage dont le codage dépend de l'état des blocs voisins (prédictions intra et inter, reconstruction, codage entropique) et éventuellement d'autres blocs suivant les choix d'implémentation.

Le mode forcé est ensuite activé et pour cela un signal binaire `Mode_I_PCM forcé' 38 permettant d'indiquer le changement de mode prend la valeur '1' 30. Dans ce mode, le codeur entropique se met en attente de fin de restauration de la boucle d'encodage. Pendant cette attente, le mode I_PCM est systématiquement utilisé pour le codage entropique des macroblocs.

Le flux compressé généré 22 est retiré du flux de sortie du codeur vidéo, l'état du codeur entropique est restauré 23 tel qu'avant le codage de ce macrobloc 35. L'état de la boucle d'encodage devient instable et le signal 'Etat_codeur' passe de '1' à '0' en conséquence 29. Le macrobloc en cours de traitement est transmis en sortie du codeur vidéo après codage I_PCM sans avoir été compressé.

Le traitement du macrobloc 39 suivant s'effectue après vérification de la stabilité de la boucle d'encodage, c'est-à-dire que le codeur vidéo est en attente de la restauration de la boucle.

Pendant la restauration les informations envoyées au codeur entropique peuvent être incohérentes pour au moins deux raisons :
- les blocs fonctionnels n'ont pas encore pris en compte l'utilisation du mode I_PCM par le codeur entropique ;
- la restauration peut elle aussi provoquer des incohérences dans le pipeline de codage.

Ces incohérences n'ont pas d'incidence, puisque le codeur entropique utilise le mode I_PCM pour les masquer. De plus, le mode I_PCM est un mode intra insensible au contexte des voisins contrairement aux autres modes de codage. A la fin de l'opération de restauration de la boucle d'encodage, les informations envoyées au codeur entropique sont à nouveau cohérentes.

Le signal 'Etat_codeur' 37 est à '0' ce qui indique que la condition de stabilité de la boucle de codage n'est pas remplie. Le mode I_PCM forcé est donc maintenu et le signal 'Mode_I_PCM_forcé' 38 reste à `1'. Le signal 'I_PCM_Contrôle' 36 revient à '0' 31.

Tant que l'état de la boucle de codage reste instable la phase de restauration n'est pas terminée, le signal 'Etat_codeur' 37 reste à '0', le mode I_PCM forcé reste activé et par conséquent le signal 'Mode_I_PCM_forcé' 38 reste à '1'. Dans ce mode, les macroblocs sont transmis sans avoir été compressés 25, 26, 27. Après un certain temps, les blocs fonctionnels constitutifs de la boucle de codage reviennent dans un état stable et le signal 'Etat_codeur' 37 prend la valeur '1' 32. Pour le prochain macrobloc à traiter 41, l'état de stabilité de la boucle de codage est détecté et le mode I_PCM forcé est désactivé. Le signal 'Mode_I_PCM_forcé' reprend alors la valeur '0' 33 et le macrobloc courant est compressé normalement 34 par le codeur entropique.

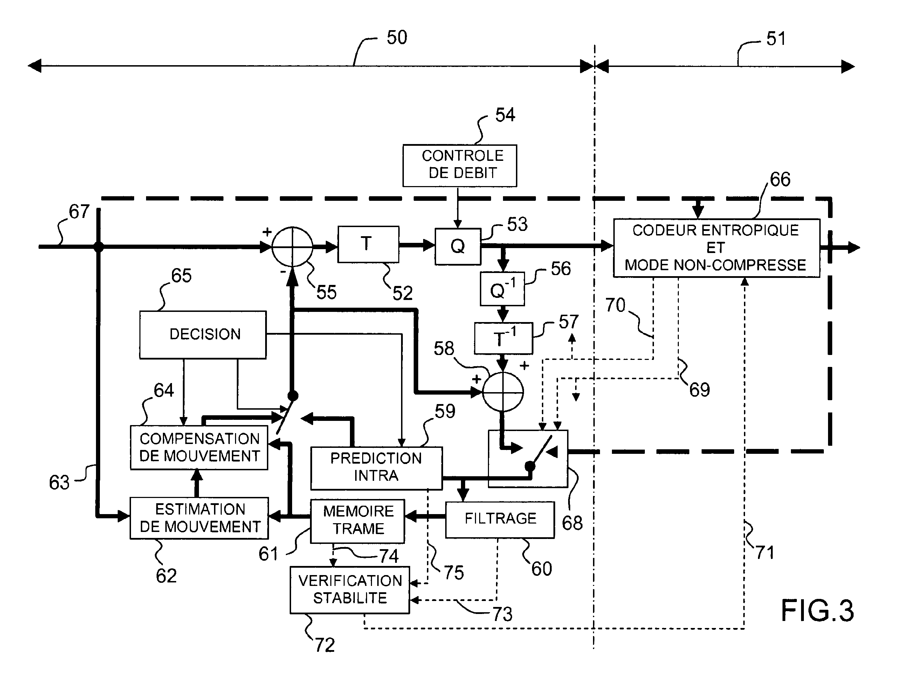

La figure 3 illustre un exemple de dispositif de codage vidéo mettant en oeuvre le procédé selon l'invention. Celui-ci est constitué de deux éléments fonctionnels principaux. Le premier est la boucle d'encodage 50 et le second le codeur entropique 51.

Le principe de la boucle de codage 50 est bien connu de l'homme du métier. On y trouve un bloc 52 prenant en entrée les échantillons de la source après compensation 55, ledit bloc réalisant une transformée permettant de passer du temporel au domaine fréquentiel. Cette transformée peut être par exemple une transformée entière telle que spécifiée dans la norme H.264. Le résultat de la transformée est ensuite quantifié 53; cette opération détruit les informations peu visibles par l'oeil humain et réduit le nombre d'informations à transmettre. Cette opération est configurée 54 en fonction, par exemple, du débit cible à garantir en sortie du codeur vidéo. Le signal après quantification 53 est reconstruit à l'aide d'un décodeur local réalisant les opérations quantification inverse 56, de transformée inverse 57 et de reconstruction 58. Lorsque le mode non-compressé n'est pas utilisé, le macrobloc après reconstruction est utilisé par un ensemble de blocs fonctionnels réalisant la prédiction intra 59 et le filtre de boucle 60. Les blocs reconstruits sont mémorisés par la mémoire de trame 61 afin de réaliser l'estimation de mouvement 62 entre le signal en entrée du codeur vidéo 63 et lesdits blocs mémorisés 61. Le résultat de l'estimation de mouvement 62, typiquement un vecteur d'estimation de mouvement, est quant à lui utilisé pour la compensation de mouvement 64 dans le but de créer une prédiction. Un bloc fonctionnel de décision 65 permet de configurer et d'activer la prédiction intra 59 et/ou la compensation de mouvement 64.

La deuxième partie du codeur vidéo 51 est composée notamment d'un bloc fonctionnel réalisant le codage entropique 66. En outre, ce bloc fonctionnel 66 comporte des moyens de décision permettant de déclencher le mode non-compressé et de le forcer tel que décrit dans les exemples des figures 1 et 2. Par exemple, lorsque le bloc de codage 66 décide d'activer le mode non compressé, les signaux 'I_PCM_Control' 69 et 'Mode_I_PCM_forcé' 70 tels qu'introduit précédemment sont utilisés pour paramétrer la boucle de codage 50 et particulièrement le choix de l'entrée 68 de la boucle d'encodage. Ce choix s'effectue entre le signal source 67 et le signal résultant de la reconstruction 58. En effet, lorsque le mode non compressé est utilisé, le signal source 67 est utilisé directement par les blocs impliqués dans la compensation de mouvement et la prédiction intra 59, 60, 61, 62, 64 à la place du signal résultant de la reconstruction 58.

Une fois le mode non compressé activé suite à une décision du codeur entropique 66, le codeur passe en mode forcé jusqu'à ce que la boucle d'encodage 50 soit revenue dans un état stable. Cet état de stabilité peut être indiqué au codeur entropique 66 en utilisant par exemple un signal 'Etat_codeur' 71 tel qu'introduit précédemment. Ce signal 71 est généré par exemple à l'aide d'un bloc fonctionnel 72 de la boucle de codage 50, ledit bloc fonctionnel prenant en entrée des signaux 73, 74, 75 l'informant de la stabilité de chacun des blocs de la boucle de codage 50. Dans l'exemple de la figure 2, les signaux de stabilité 73, 74, 75 sont générés par les blocs de filtrage 62, de mémoire trame 61 et de filtrage 60, mais d'autres configurations sont possibles en fonction de l'implémentation choisie. Par exemple, après activation du mode I_PCM, chacun des blocs incrémente un compteur temporel et le compare à une valeur temporelle qui lui est propre et qui, lorsque ladite valeur est atteinte, assure que ledit bloc est retourné dans un état de stable. Ce retour à la stabilité est ensuite indiqué au bloc fonctionnel de vérification de la stabilité 72.

Le bloc fonctionnel de vérification de la stabilité 72 décide de la stabilité globale du système lorsque l'ensemble des signaux d'entrées 73, 74, 75 indique que la boucle d'encodage, dans son ensemble, est revenue dans un état stable. Dans ce cas, la cohérence entre l'état interne du décodeur et l'état interne de l'encodeur est garantie. Une alternative possible est de fixer une valeur de période temporelle et de considérer qu'après l'activation du mode non-compressé, la boucle de codage est revenue dans un état stable à la fin de cette période.

## Revendications

1. Procédé de codage vidéo mise en oeuvre par un codeur vidéo comportant un mécanisme permettant d'activer ou de désactiver la compression des macroblocs du flux vidéo à coder en fonction de l'efficacité de la compression et fonctionnant dans au moins deux modes, un premier mode de codage normal et un second mode non compressé, ledit procédé étant **caractérisé en ce que** :
- en mode de codage normal, le macrobloc en cours de traitement est compressé par une boucle d'encodage (4) puis par un codeur entropique, ladite compression étant considérée efficace (5) si la taille qu'occupe le macrobloc compressé est sensiblement inférieure à la taille qu'occupe le macrobloc sans compression ;
- dans le cas ou la compression du macrobloc en cours de traitement n'est pas efficace, le mode non compressé est activé (6), ledit mode non compressé étant **caractérisé par le fait que** les échantillons de la source vidéo correspondant au macrobloc en cours de traitement sont transmis sans compression en sortie du codeur (10), lesdits échantillons étant utilisés comme références de prédiction par la boucle d'encodage, le mode non compressé étant maintenu (9) après avoir été activé tant que les éléments fonctionnels de la boucle d'encodage ne sont pas revenus dans un état stable, c'est-à-dire tant que lesdits éléments fonctionnels sont susceptibles d'introduire des distorsions à la reprise du mode de codage normal lesdites distorsions donnant lieu à des incohérences entre l'état du codeur vidéo et l'état interne d'un décodeur apte à décoder le flux vidéo codé.

2. Procédé selon la revendication 1 **caractérisé en ce que** suite à l'activation du mode non compressé, la détection du retour de la stabilité de la boucle d'encodage est indiquée au codeur entropique à l'aide d'un signal de contrôle (7, 71), ledit signal étant positionné dans un état actif lorsque l'ensemble des blocs fonctionnels de la boucle d'encodage affectés par l'activation du mode non compressé sont revenus dans un état stable (73, 74, 75).

3. Procédé selon la revendication 1 **caractérisé en ce que**, suite à l'activation du mode non compressé, le retour de la stabilité de la boucle d'encodage est déduit par le codeur entropique à l'aide d'un paramètre indiquant un temps de restauration, la valeur dudit paramètre devant être déterminée de manière à ce que les éléments de la boucle d'encodage aient le temps de revenir à un état stable durant cette période.

4. Procédé selon l'une des revendications précédentes **caractérisé en ce que** le codeur vidéo suit les spécifications de la norme H.264.

5. Procédé selon l'une des revendications précédentes **caractérisé en ce que** l'efficacité de la compression est vérifiée (5) en comparant le nombre de bits après compression du macrobloc courant à une valeur seuil.

6. Procédé selon l'une des revendications précédentes **caractérisé en ce que** suite à l'activation du mode non compressé, l'état du codeur entropique est restauré, c'est-à-dire que le codeur entropique revient à l'état précédent dans lequel il se trouvait au début du traitement du macrobloc pour lequel le mode non compressé a été déclenché.

7. Dispositif de codage vidéo mettant en oeuvre le procédé selon l'une des revendications 1 à 4 et **caractérisé en ce qu'**il comporte au moins :
- une boucle d'encodage (50) permettant de compresser les macroblocs en appliquant au moins les étapes de transformée (52), de quantification (53), de prédiction intra (59) et de compensation de mouvement (64) sur le signal entrant (67) ;
- un codeur entropique (51, 66) réalisant en mode de codage normal une compression du flux d'information en sortie de la boucle d'encodage et comportant des moyens de vérifier l'efficacité de la compression, des moyens de décider de l'utilisation du mode non compressé, des moyens de configurer la boucle d'encodage du dispositif et des moyens de vérifier la stabilité de ladite boucle.

## Claims

1. A method for encoding video, implemented by a video encoder, comprising a mechanism allowing the activation or deactivation of the compression of macroblocks of the video stream to be coded as a function of the efficiency of the compression and operating in at least two modes, a first normal coding mode and a second non-compressed mode, said method being **characterised in that**:
- in the normal encoding mode the macroblock being processed is compressed by an encoding circuit (4) and then by an entropy encoder, said compression being considered efficient (5) if the size occupied by the compressed macroblock is substantially less than the size occupied by the macroblock without compression;
- in the event that the compression of the macroblock being processed is not efficient, the non-compressed mode is activated (6), said non-compressed mode being **characterised by** the fact that the samples of the video source corresponding to the macroblock being processed are transmitted without compression at the output of the encoder (10), said samples being used as prediction references by the encoding circuit, the non-compressed mode being maintained (9) after having been activated as long as the operational elements of the encoding circuit have not returned to a stable condition, that is as long as said operational elements are susceptible to introducing distortions once the normal coding mode is resumed, said distortions giving rise to incoherences between the internal state of the video encoder and the internal state of a decoder designed to decode the encoded video stream.

2. The method according to claim 1, **characterised in that** following activation of the non-compressed mode, the detection of the restoration of encoding circuit stability is indicated to the entropy encoder by means of a control signal (7, 71), said signal being set into an active state when all of the functional blocks of the encoding circuit affected by the activation of the non-compressed mode are restored to a stable state (73, 74, 75).

3. The method according to claim 1, **characterised in that**, following activation of the non-compressed mode, the restoration of encoding circuit stability is deduced by the entropy encoder using a parameter indicating a restoration time, the value of said parameter having to be determined so that the elements of the encoding circuit have enough time to return to a stable state during said period.

4. The method according to any one of the preceding claims, **characterised in that** the video encoder adheres to the specifications of standard H.264.

5. The method according to any one of the preceding claims, **characterised in that** the efficiency of the compression is verified (5) by comparing the number of bits following compression of the current macroblock with a threshold value.

6. The method according to any one of the preceding claims, **characterised in that** following activation of the non-compressed mode, the state of the entropy encoder is restored, that is the entropy encoder returns to the state that it was in at the start of processing of the macroblock for which the non-compressed mode had been started.

7. A video coding device implementing the method according to any one of claims 1 to 4 and **characterised in that** it comprises at least:
- an encoding circuit (50) allowing the macroblocks to be compressed by applying at least steps of transformation (52), quantification (53), intra-prediction (59) and motion compensation (64) on the incoming signal (67);
- an entropy encoder (51, 66) performing, in the normal coding mode, a compression of the data stream at the output of the encoding circuit and comprising means for verifying the efficiency of the compression, means for deciding the use of the non-compressed mode, means for configuring the encoding circuit of the device and means for verifying the stability of said circuit.

## Patentansprüche

1. Videocodierverfahren, ausgeführt von einem Videocodierer, der einen Mechanismus umfasst, der die Aktivierung oder Desaktivierung der Kompression von Makroblöcken des zu codierenden Videostroms in Abhängigkeit von der Wirksamkeit der Kompression zulässt und in wenigstens zwei Modi arbeitet, einem ersten normalen Codiermodus und einem zweiten unkomprimierten Modus, wobei das Verfahren **dadurch gekennzeichnet ist, dass**:
- der bearbeitete Makroblock im normalen Codiermodus von einer Codierschaltung (4) und dann von einem Entropiecodierer komprimiert wird, wobei die Kompression dann als wirksam (5) angesehen wird, wenn die von dem komprimierten Makroblock eingenommene Größe erheblich geringer ist als die von dem unkomprimierten Makroblock eingenommene Größe;
- der unkomprimierte Modus aktiviert (6) wird, falls die Kompression des bearbeiteten Makroblocks nicht wirksam ist, wobei der unkomprimierte Modus durch die Tatsache **gekennzeichnet** ist, dass die Abtastwerte der dem bearbeiteten Makroblock entsprechenden Videoquelle ohne Kompression am Ausgang des Codierers (10) übertragen werden, wobei die Abtastwerte als Vorhersagereferenzen von der Codierschaltung verwendet werden, wobei der unkomprimierte Modus nach der Aktivierung gehalten (9) wird, solange die Betriebselemente der Codierschaltung nicht in einen stabilen Zustand zurückgekehrt sind, das heißt solange die Betriebselemente dazu neigen, bei Wiederaufnahme des normalen Codiermodus Verzerrungen zu verursachen, wobei die Verzerrungen Inkohärenzen zwischen dem internen Zustand des Videocodierers und dem internen Zustand eines Decoders zum Decodieren des codierten Videostroms verursachen.

2. Verfahren nach Anspruch 1, **dadurch gekennzeichnet, dass** nach der Aktivierung des unkomprimierten Modus die Erkennung der Wiederherstellung der Stabilität der Codierschaltung dem Entropiecodierer mittels eines Steuersignals (7, 71) angezeigt wird, wobei das Signal in einen aktiven Zustand gesetzt wird, wenn alle durch die Aktivierung des unkomprimierten Modus betroffenen Funktionsblöcke der Codierschaltung in einen stabilen Zustand (73, 74, 75) zurückgekehrt sind.

3. Verfahren nach Anspruch 1, **dadurch gekennzeichnet, dass** nach der Aktivierung des unkomprimierten Modus die Wiederherstellung der Stabilität der Codierschaltung von dem Entropiecodierer mittels eines Parameters abgeleitet wird, der eine Wiederherstellungszeit anzeigt, wobei der Wert des Parameters so ermittelt werden muss, dass die Elemente der Codierschaltung genügend Zeit haben, um während dieser Periode in einen stabilen Zustand zurückzukehren.

4. Verfahren nach einem der vorherigen Ansprüche, **dadurch gekennzeichnet, dass** der Videocodierer die Spezifikationen der Norm H.264 erfüllt.

5. Verfahren nach einem der vorherigen Ansprüche, **dadurch gekennzeichnet, dass** die Wirksamkeit der Kompression durch Vergleichen der Anzahl von Bits nach der Kompression des aktuellen Makroblocks mit einem Schwellenwert geprüft (5) wird.

6. Verfahren nach einem der vorherigen Ansprüche, **dadurch gekennzeichnet, dass** nach der Aktivierung des unkomprimierten Modus der Zustand des Entropiecodierers wiederhergestellt wird, das heißt der Entropiecodierer kehrt in den vorherigen Zustand zurück, in dem er sich zu Beginn der Bearbeitung des Makroblocks befand, für den der unkomprimierte Modus gestartet wurde.

7. Videocodiervorrichtung zum Ausführen des Verfahrens nach einem der Ansprüche 1 bis 4, **dadurch gekennzeichnet, dass** sie wenigstens Folgendes umfasst:
- eine Codierschaltung (50), mit der die Makroblöcke durch Anwenden wenigstens der Schritte Transformation (52), Quantifikation (53), Intraprädiktion (59) und Bewegungskompensation (64) auf das eingehende Signal (67) komprimiert werden können;
- einen Entropiecodierer (51, 66), der im normalen Codiermodus eine Kompression des Informationsflusses am Ausgang der Codierschaltung durchführt und Mittel zum Prüfen der Wirksamkeit der Kompression, Mittel zum Fällen einer Entscheidung über die Benutzung des unkomprimierten Modus, Mittel zum Konfigurieren der Codierschaltung der Vorrichtung und Mittel zum Prüfen der Stabilität der Schaltung umfasst.
